(19) Europäisches Patentamt

European Patent Office

Office européen des brevets

(11) Veröffentlichungsnummer: **0 349 672 B1**

(12) **EUROPÄISCHE PATENTSCHRIFT**

(45) Veröffentlichungstag der Patentschrift: **18.03.92**

(21) Anmeldenummer: **88117542.6**

(22) Anmeldetag: **21.10.88**

(51) Int. Cl.⁵: **F16D 3/79**

(54) **Flexible Wellenkupplung mit je einem Anschlussflansch für den Anbau weiterer Kupplungsteile.**

(30) Priorität: **01.07.88 DE 3822207**

(43) Veröffentlichungstag der Anmeldung:
**10.01.90 Patentblatt 90/02**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
**EP-A- 0 184 051**
**GB-A- 399 979**
**GB-A- 2 159 240**

(73) Patentinhaber: **REXNORD ANTRIEBSTECHNIK**
**Zweigniederlassung der Rexnord Gesell-**
**schaft mbH Überwasserstrasse 64**
**W-4600 Dortmund 1(DE)**

(72) Erfinder: **Wasserfuhr, Wilhelm**
**Falkenstrasse 4**
**W-4620 Castrop-Rauxel(DE)**

(74) Vertreter: **Patentanwälte Meinke und Dabring-**
**haus Dipl.-Ing. J. Meinke Dipl.-Ing. W. Dab-**
**ringhaus**
**Westenhellweg 67**
**W-4600 Dortmund 1(DE)**

## Beschreibung

Die Erfindung betrifft eine flexible Wellenkupplung mit zwei Anschlußflanschen für den Anbau weiterer Kupplungsteile und einem mit axialem Abstand an den beiden Anschlußflanschen angeordneten und mit Spannschrauben auf dem Umfang wechselweise mit dem einen oder anderen Anschlußflansch verbundenen, federelastischen Lamellenpaketkranz, wobei der Lamellenpaketkranz auf Spannbuchsen sitzt, von den Spannschrauben zusammengehalten und zwischen Distanzringen zusammen mit den Anschlußflanschen verspannt ist.

Derartige Wellenkupplungen dienen dazu, Drehbewegungen unter Drehmomentbelastung bei Kompensierung von im Betrieb auftretenden Wellenverlagerungen drehsteif zu übertragen. Dabei erfolgt die Kompensation von Wellenverlagerungen derart, daß das Lamellenpaket als in sich flexibles Element wechselweise (kardanisch) an beiden umschließenden Ringen angeschlossen wird. Dadurch kann die gesamte Flanscheinheit sowohl axial als auch winkelig ausgelenkt werden. Bei Einsatz zweier Kupplungspaare ist dann aufgrund der Fähigkeit zur winkligen Auslenkung beider Kupplungen auch ein Parallelversatz kompensierbar. Eine solche Wellenkupplung arbeitet aber nur dann einwandfrei, wenn die Drehbewegungen möglichst spiel- und unwuchtfrei übertragen werden können, wozu ein enorm hoher fertigungstechnischer Aufwand notwendig ist, um möglichst exakte Verbindungen zwischen Lamellenpaket und Anschlußflanschen zu gewährleisten.

Eine derartige Wellenkupplung ist beispielsweise aus der US-PS 4 073 161 bekannt. Bei dieser Wellenkupplung wird eine möglichst spielfreie Verbindung dadurch zu erzielen versucht, daß eine Paßverbindung hergestellt wird, welche aus Spannschrauben, zylindrischen Spannbuchsen mit flanschförmig angeformten einseitigen Distanzringen und zusätzlichen Distanzringen besteht, wobei der Lamellenpaketkranz mit hoher Paßgenauigkeit auf den Spannbuchsen sitzt und zwischen den Distanzringen mittels der Spannschrauben zusammengehalten wird. Um eine vollständige Spielfreiheit zu gewährleisten, muß eine derartige Paßverbindung sehr exakt gefertigt sein, d. h. die Bohrungen in den Anschlußflanschen und Lamellen und auch die Lochteilungen und Lochkreisdurchmesser müssen sehr eng toleriert sein. Da jedoch bei der Fertigung Fertigungstoleranzen nicht zu vermeiden sind, kommt es bei der Montage einer solchen Verbindung nicht selten zu Verspannungen. Aufgrund der Fertigungstoleranzen kann auch nicht ausgeschlossen werden, daß unter Drehmomentbelastung einzelne Schraubenschäfte und Lochwandungen stärker belastet werden, wodurch es dann bei einzelnen Schraubenverbindungen im System zu nicht mehr zulässigen Lochlaibungsspannungen und Scherkräften kommt, da sich die Drehung und Belastung nicht gleichmäßig auf alle Schraubenverbindungen verteilt. Das kann zu einem Versatz der umschließenden Anschlußflansche und letztendlich zu Unwuchten und Verschleiß führen.

Eine andere gattungsgemäße Wellenkupplung ist aus der DE-AS 26 45 600 bekannt. Bei dieser Wellenkupplung bildet der Lamellenpaketkranz zusammen mit einem damit mit Schraubenbolzen verbundenen Zentrierring ein vormontiertes Paket. Der Zentrierring weist eine fein bearbeitete Umfangsfläche auf, die mit einer entsprechend fein bearbeiteten Umfangsfläche an einem Flansch einen zylindrischen Paßsitz bildet. Diese vormontierte Einheit ist mit den Spannbolzen ggf. unter Zwischenschaltung von Führungsbuchsen wechselweise an den beiden Flanschen befestigt. Zwar wird bei dieser Wellenkupplung der Lamellenkranz durch den Zentrierring zentriert gehalten, doch sind keine Maßnahmen getroffen, um das fertigungsbedingte Spiel zwischen Spannbolzen und dem Lamellenpaket zu kompensieren. Bei stoßartiger Belastung kann es zu einer Versetzung der Spannbolzen wegen des Spiels kommen, was eine neue Unwucht zur Folge hat.

Um die Versatzmöglichkeit und damit verbunden ein mögliches Spiel und im Betrieb auftretende Unwuchten zu vermeiden, wurden Anstrengungen unternommen, eine völlige Spielfreiheit herzustellen. Bei einer anderen Wellenkupplung (EP 0 184 051) wird dies durch die Ausbildung eines konischen Schraubenschaftes mit einer entsprechenden konischen Dehnbuchse zur Ausschaltung des Spiels aufgrund der Fertigungstoleranzen zu erreichen versucht.

Nachteilig sind jedoch die beim Dehnen in die Bauteile, insbesondere das Lamellenpaket, über die Bohrungen induzierten Spannungen. Weiterhin ist der Kegel des Schraubenschaftes und die kegelige Bohrung in der Dehnbuchse zur Erreichung einer gleichmäßigen Dehnung sehr genau zu fertigen, da sonst über der Lamellenpaketstärke ungleichmäßige Lochlaibungsspannungen auftreten die sich nachteilig auf die Funktion des Bauteils auswirken.

Demgegenüber besteht die Aufgabe der Erfindung in der Schaffung einer Lösung, welche eine möglichst vollständige Spiel- und Versatzfreiheit ermöglicht, wobei gleichzeitig die aus dem zu übertragenden Drehmoment kommenden Kräfte gleichmäßig auf alle Verbindungen verteilt werden sollen, um eine höhere Leistungsdichte, d. h. höheres übertragbares Drehmoment bei gleichen oder kleineren Abmessungen zu erreichen.

Diese Aufgabe wird mit einer flexiblen Wellenkupplung der eingangs bezeichneten Art erfindungsgemäß dadurch gelöst, daß jede Spannbuchse als mit einer Schneidkante versehene, in die Lamellenpaketbohrung und wenigstens bereichsweise in die entsprechende Anschlußflanschbohrung eingepreßte, gehärtete Schälbuchse ausgebildet ist, deren Außendurchmesser größer als der maximal mögliche Lochdurchmesser der jeweiligen Lamellenpaketbohrung und der entsprechenden Anschlußflanschbohrung ist.

Durch die Ausbildung der Spannbuchse als gehärtete Schälbuchse mit Schneidkante wird eine nahezu vollständige Spiel- und Versatzfreiheit gewährleistet. Die Schälbuchse schält nämlich beim Einpressen den Werkstoff aus den Lochwandungen und kompensiert damit Versatz und Fertigungstoleranzen, ohne bleibende Spannungen in das Gesamtsystem zu induzieren. Gleichzeitig entsteht ein spielfreier Paß-Preßsitz, der gewährleistet, daß ein zu übertragendes Drehmoment seine Kräfte gleichmäßig auf alle Buchsen verteilt und somit jede Buchse gleich belastet wird. Durch das Eindringen der Schälbuchse bis in die Anschlußflanschbohrung hinein wird zusätzlich die Knickelastizität der Verbindung, d. h. die Einspannqualität vermindert. Die Spannschrauben dienen zur Sicherung einer festen Anlage der Einzellamellen zueinander zu einem Lamellenpaket und verhindern somit ein mögliches Auseinanderklaffen des Lamellenpaketes. Durch diese nahezu spiel- und unwuchtfreie Kupplungsverbindung können im Vergleich zu bisher bekannten Ausführungen wesentlich höhere Drehzahlen verwirklicht werden.

Es ist besonders zweckmäßig, wenn die Eindringtiefe der Schälbuchse im wesentlichen bis zum Grunde der Anschlußflanschbohrung für den Schraubenkopf ausgebildet ist. Durch diese Ausbildung wird die Stabilität der Kupplungsverbindung wesentlich vergrößert, da die Knickfähigkeit der Buchsen-Lamellenverbindung wesentlich verringert wird.

Es hat sich als besonders günstig erwiesen, wenn der Außendurchmesser der Schälbuchse etwa 0,1 mm größer als der aufgrund von Fertigungstoleranzen maximal mögliche Lochversatz und Durchmesser der Bohrungen ausgebildet ist. Durch dieses Übermaß der Schälbuchse gegenüber den Bohrungsdurchmessern ist gewährleistet, daß sich die Schälbuchse mittels der Schneidkante beim Einpressen derart in den Werkstoff der Lochwandungen schält, daß Versatz und Fertigungstoleranzen vollständig kompensiert werden. Gleichzeitig entsteht dabei ein spielfreier Paß-Preßsitz, der eine gleichmäßige Kraftübertragung auf alle Buchsen sicherstellt und somit die Entstehung von Unwuchten vermeidet. Dabei ist der Innendurchmesser der Buchsen so gehalten, daß zur Fixierung des Gesamtsystems handelsübliche Schrauben verwendet werden können, und somit teure Paßschrauben vermieden werden.

In vorteilhafter Ausgestaltung der Erfindung ist vorgesehen, daß die Schälbuchse in die Spannschraube integriert ist. Diese Ausführungsform ist insbesondere dann vorgesehen, wenn geringe Kräfte übertragen werden müssen, d. h. Schrauben mit geringem Schaftdurchmesser verwandt werden können. Es ist dann aus Platzgründen besonders vorteilhaft keine zusätzlichen Schälbuchsen verwenden zu müssen.

Dabei kann nach einer ersten Ausführungsform der Erfindung vorgesehen sein, daß die Spannschraube im wesentlichen zwei Bereiche aufweist, von denen der dem Schraubenkopf zugewandte Bereich als zylindrischer Schaft mit Schneidkante und der andere freie Bereich als Außengewinde für eine Konterschraube ausgebildet ist.

Alternativ kann auch vorgesehen sein, daß die Spannschraube zylindrisch mit einer Schneidkante am freien Ende ausgebildet ist und am freien Ende eine mittige Innenbohrung mit Innengewinde für eine Gegenschraube aufweist. Dabei dient bei den beiden letztgenannten Ausführungsformen der Erfindung die Spannschraube selbst als Schälbuchse mit Schneidkante.

Zur Lösung der eingangs gestellten Aufgabe sieht die Erfindung auch ein Verfahren zur Herstellung einer erfindungsgemäßen Wellenkupplung vor, bei welchem zunächst der Lamellenpaketkranz, die Distanzringe und die Anschlußflansche positioniert werden und anschließend zunächst von der einen Seite und danach von der anderen Seite jeweils alle Schälbuchsen gleichzeitig und gleichförmig in die Bohrungen hineingepreßt werden.

Durch diese Verfahrensführung wird erreicht, daß alle Buchsen gleichmäßig und versatzfrei in die Bohrungslöcher eingepreßt werden, wodurch Unwuchten vermieden werden.

Zweckmäßigerweise wird das Verfahren mit einer Presse durchgeführt. Nach dem Einpressen der Schälbuchsen werden dann die Spannschrauben eingebracht und mit entsprechenden Kontermuttern versehen, wodurch eine feste Anlage der Einzellamellen zueinander zu einem Lamellenpaket gewährleistet wird.

Die Erfindung ist nachstehend anhand der Zeichnung beispißlsweise näher erläutert. Diese zeigt in:

Fig. 1     in einem Axialschnitt eine Wellenkupplung nach einem ersten Ausführungsbeispiel,

Fig. 2     ebenfalls in einem Axialschnitt eine Wellenkupplung nach einem zweiten Ausführungsbeispiel,

Fig. 3     eine weitere Ausführungsform einer Wellenkupplung ebenfalls in einem Axialschnitt und

Fig. 4     in schematischer Darstellung in einem Teilschnitt eine Preßvorrichtung.

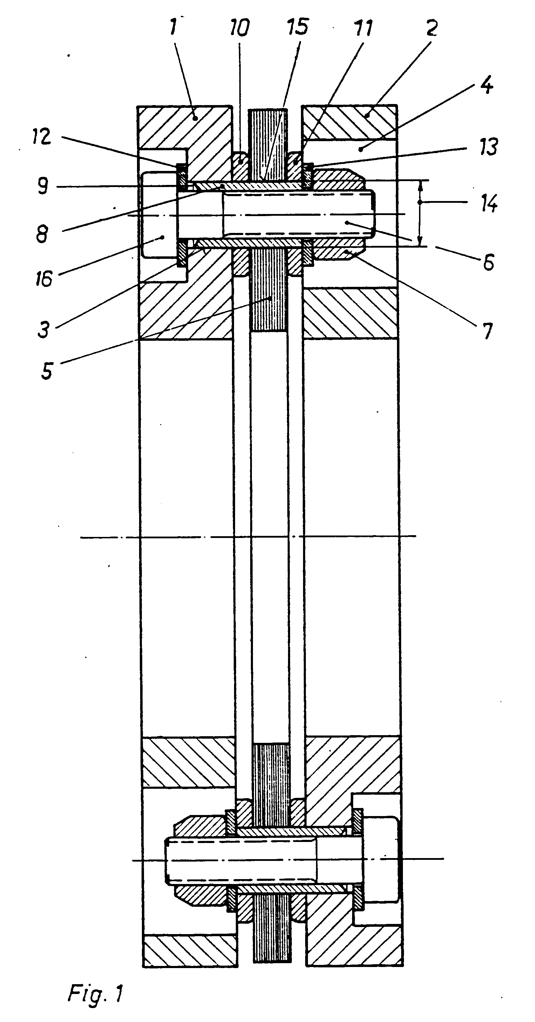

Eine flexible Wellenkupplung (Fig. 1) weist zwei Anschlußflansche 1,2 auf, welche drehfest mit jeweils einem in der Zeichnung nicht näher dargestellten Wellenende oder dgl. verbunden sind. Dabei sind in jedem Flansch auf einem gemeinsamen Umfang abwechselnd Anschlußflanschbohrungen 3,4 vorgesehen, wobei die Anschlußflanschbohrungen 4 einen größeren Durchmesser aufweisen. Zwischen den beiden Anschlußflanschen 1,2 ist ein Lamellenpaketkranz 5 angeordnet, der sich aus einzelnen Laschenpaketen zusammensetzt. Der mit Abstand zwischen den Flanschen 1,2 angeordnete Lamellenpaketkranz 5 ist mittels Spannschrauben 6 wechselweise an dem einen und anderen Flansch 1 ,2 angeschraubt. Wie der Zeichnung zu entnehmen ist, ist bei Befestigung des Lamellenkranzes 5 mittels der Spannschraube 6 am Anschlußflansch 1 der Flansch 2 an der gegenüberliegenden Stelle mit Spiel gegenüber einer Kontermutter 7 ausgebildet.

Der Lamellenpaketkranz 5 sitzt dabei nicht direkt auf der Spannschraube 6, sondern auf einer gehärteten Schälbuchse 8 mit Schneidkante 9. Außerdem sind beidseitig des Lamellenkranzes 5 Distanzringe 10,11 angeordnet. Zusätzlich sind Unterlegscheiben 12,13 vorgesehen.

Die Schälbuchse 8 weist vor dem Einpressen einen Außendurchmesser 14 auf, der etwa 0,1 mm größer als der aufgrund von Fertigungstoleranzen maximal mögliche Lochversatz und Durchmesser der Bohrungen, insbesondere der Lamellenkranzbohrung 15, ausgebildet ist. Dadurch schält sich die Schälbuchse 8 beim Einpressen mittels Ihrer Schneidkante 9 in die Bohrungen 15,3 sowie die Bohrungen der Distanzringe 10,11, so daß Fertigungstoleranzen und Versatz ausgeglichen werden. Zur Erhöhung der Knickfestigkeit ist die Schälbuchse dabei derart in die Bohrungen eingepreßt, daß ihre Eindringtiefe etwa bis zum Grunde der Anschlußflanschbohrung 3 für den Schraubenkopf 16 ausgebildet ist.

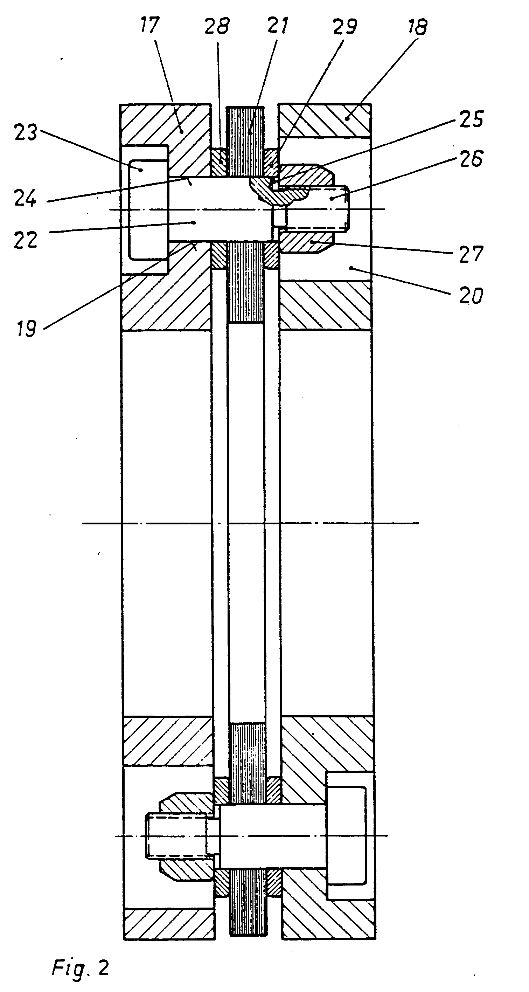

Ein abgewandeltes Ausführungsbeispiel ist in Fig. 2 dargestellt. Die flexible Wellenkupplung weist hier zwei Anschlußflansche 17,18 auf, wobei am Umfang jeweils versetzt zueinander angeordnete Anschlußflanschbohrungen 19,20 vorgesehen sind. Zwischen den Anschlußflanschen 17 ,18 ist ein Lamellenpaketkranz 21 angeordnet, der mittels Spannschrauben 22 wechselweise an dem einen oder anderen Flansch 17,18 befestigt ist.

Jede Spannschraube 22 weist dabei im wesentlichen zwei Bereiche auf, wobei der dem Schraubenkopf 23 zugewandte Bereich 24 als zylindrischer Schaft mit Schneidkante 25 und der andere freie Bereich 26 als Außengewinde für eine Kontermutter 27 ausgebildet ist. Weiterhin sind beidseits des Lamellenpaketkranzes 21 Distanzringe 28,29 vorgesehen.

Bei dieser Ausführungsform wird die gleichzeitig als Schälbuchse dienende Spannschraube 6 jeweils in die Bohrungen eingepreßt, wodurch mittels der Schneidkante 25 Material aus den Bohrungen ausgeschält wird, wobei der Außendurchmesser des zylindrischen Schafts 24 jeder Spannschraube 22 etwa um 0,1 mm größer als der aufgrund von Fertigungstoleranzen maximal mögliche Lochversatz und Durchmesser der Bohrungen ausgebildet ist. Diese Ausbildungsform mit in die Spannschraube 24 integrierter Schälbuchse eignet sich insbesondere in Anwendungsfällen, in welchen nur geringe Kupplungskräfte übertragen werden müssen, d. h. Schrauben mit nur geringem Schaftdurchmesser verwandt werden müssen, oder wenn für eine zusätzliche Schälbuchse kein ausreichender Platz vorhanden ist.

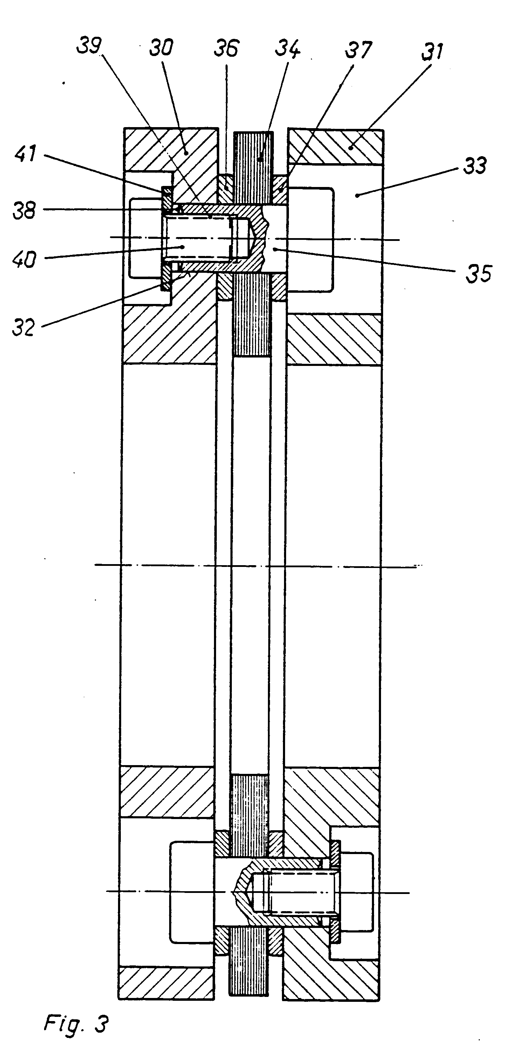

Eine dritte Ausführungsform ist in Fig. 3 dargestellt. Die Wellenkupplung besteht hier aus zwei Anschlußflanschen 30 und 31 mit jeweils versetzt zueinander angeordneten Anschlußflanschbohrungen 32,33. Zwischen den Anschlußflanschen 30 und 31 ist ein Lamellenpaketkranz 34 angeordnet, welcher auf Spannschrauben 35 mit Distanzringen 36 und 37 sitzt.

Jede Spannschraube 35 ist dabei zylindrisch mit einer Schneidkante 38 und einer mittigen Innenbohrung 39 mit Innengewinde für eine Gegenschraube 40 ausgebildet. Zusätzlich ist eine Unterlegscheibe 41 vorgesehen. Auch bei dieser Ausführungsform werden die als Schälbuchse dienenden Spannschrauben 35 jeweils versetzt von der einen und dann von der anderen Seite in die Bohrungen der Anschlußflansche sowie des Lamellenpaketkranzes 34 eingepreßt.

In Fig. 4 ist eine Preßvorrichtung 42 dargestellt, welche zur Montage der vorbeschriebenen Wellenkupplungen, insbesondere der nach Fig. 1, geeignet ist. Diese Vorrichtung 42 weist einen Oberstempel 43 mit entsprechend der Lamellenpaketkranzbohrungen kreisförmig auf einem Umfang angeordneten Preßwerkzeugen 44 zum Einpressen der Schälbuchsen 8 auf. Dabei ist ein Schälwerkzeug 44 zur Verdeutlichung auch noch vergrößert dargestellt.

Unterhalb des Oberstempels 43 ist ein kreisförmiger Pressentisch 45 angeordnet, welcher versenkbare Positioniereinrichtungen 46 aufweist, die entsprechend den Preßwerkzeugen 44 gegenüberliegend angeordnet sind. Diese zylindrischen Positioniereinrichtungen 46 sind in Vertiefungen 47 eindrückbar, werden aber über elastische Rückstellglieder 48 nach dem Eindrücken wieder in ihre Ausgangsposition herausgedrückt. Dabei ist der Außendurchmesser der Positioniereinrichtungen 46 entsprechend der Bohrungsdurchmesser des Lamellenpaketkranzes 5 bzw. der Anschlußflanschbohrungen 3 gewählt.

Zur Montage einer erfindungsgemäßen Wellenkupplung werden zunächst der Lamellenpaketkranz 5, die Distanzringe 10,11 und die Anschlußflansche 1,2 mittels der Positioniereinrichtungen 46 exakt auf den Tisch 45 der Preßvorrichtung 42 positioniert. Anschließend werden zunächst von der einen Seite alle Schälbuchsen 8 gleichzeitig in die Bohrungen mittels der Preßwerkzeuge 44 eingepreßt, wodurch sich die Schälbuchsen 8 in die Bohrungen mittels der Schneidkante 9 einschälen. Danach wird die Wellenkupplung umgedreht und mit der anderen Seite nach oben positioniert und anschließend werden die restlichen Schälbuchsen gleichzeitig eingepreßt.

Durch diese gleichzeitige und gleichförmige Einpreßung aller Buchsen in die Bohrungen wird eine Kompensation der Form- und Lagetoleranzen durch ein entsprechendes Ausschälen der Bohrungen erreicht. Anschließend werden die Schrauben 6 mit den Unterlegscheiben 12 und 13 und den Muttern 7 eingebracht. Die Schrauben sichern dabei die feste Anlage der einzelnen Lamellen zueinander zu einem Lamellenpaket und verhindern somit ein mögliches Auseinanderklaffen des Lamellenpaketes und vermindern die Knickfähigkeit der Buchsen-Lamellenverbindung.

Natürlich ist die Erfindung nicht auf die in der Zeichnung dargestellten Ausführungsbeispiele beschränkt. Weitere Ausgestaltungen der Erfindung sind im Rahmen der Beigefügten Patentansprüche möglich, ohne den Grundgedanken zu verlassen. So ist es selbstverständlich auch möglich, mehrere erfindungsgemäße Wellenkupplungen untereinander zu koppeln um einen Achsversatz zwischen einer Antriebs- und Abtriebswelle ausgleichen zu können und dgl. mehr.

**Patentansprüche**

1. Flexible Wellenkupplung mit zwei Anschlußflanschen für den Anbau weiterer Kupplungsteile und einem zwischen und mit axialem Abstand von den beiden Anschlußflanschen angeordneten und mit Spannschrauben auf dem Umfang wechselweise mit dem einen oder anderen Anschlußflansch verbundenen, federelastischen Lamellenpaketkranz, wobei der Lamellenpaketkranz auf Spannbuchsen sitzt, von den Spannschrauben zusammengehalten und zwischen Distanzringen zusammen mit den Anschlußflanschen verspannt ist,
dadurch gekennzeichnet,
daß jede Spannbuchse (8) als mit einer Schneidkante (9) versehene, in die Lamellenpaketbohrung (15) und wenigstens bereichsweise in die entsprechende Anschlußflanschbohrung (3) eingepreßte, gehärtete Schälbuchse (8) ausgebildet ist, deren Außendurchmesser (14) größer als der maximal mögliche Lochdurchmesser der jeweiligen Lamellenpaketbohrung (15) und der entsprechenden Anschlußflanschbohrung (3) ist.

2. Wellenkupplung nach Anspruch 1,
dadurch gekennzeichnet,
daß die Eindringtiefe der Schälbuchse (8) im wesentlichen bis zum Grunde der Anschlußflanschbohrung (3) für den Schraubenkopf (16) ausgebildet ist.

3. Wellenkupplung nach Anspruch 1 oder 2,
dadurch gekennzeichnet,
daß der Außendurchmesser (14) der Schälbuchse (8) etwa 0,1 mm größer als der aufgrund von Fertigungstoleranzen maximal mögliche Lochversatz und Durchmesser der Bohrungen (3,15) ausgebildet ist.

4. Wellenkupplung nach Anspruch 1 oder einem der folgenden,
dadurch gekennzeichnet,
daß die Schälbuchse in die Spannschraube (22,35) integriert ist.

5. Wellenkupplung nach Anspruch 4,
dadurch gekennzeichnet,
daß die Spannschraube (22) im wesentlichen zwei Bereiche (24,26) aufweist, von dem der dem Schraubenkopf (23) zugewandte Bereich (24) als zylindrischer Schaft mit Schneidkante (25) und der andere freie Bereich (26) als Außengewinde für eine Kontermutter (27) ausgebildet ist.

6. Wellenkupplung nach Anspruch 4,
dadurch gekennzeichnet,
daß die Spannschraube (35) zylindrisch mit einer Schneidkante (38) am freien Ende ausgebildet ist und am freien Ende eine mittige Innenbohrung (39) mit Innengewinde für eine Gegenschraube (40) aufweist.

7. Verfahren zur Herstellung einer Wellenkupplung nach einem der Ansprüche 1 bis 6,
dadurch gekennzeichnet,
daß zunächst der Lamellenpaketkranz, die Distanzringe und die Anschlußflansche positioniert werden und anschließend zunächst von der einen Seite und danach von der anderen Seite jeweils alle Schälbuchsen gleichzeitig und gleichförmig in die Bohrungen hineingepreßt werden.

**Claims**

1. A flexible shaft coupling comprising two connecting flanges for the attachment of further coupling members, and a resilient plate set ring which is arranged between and at an axial spacing from the two connecting flanges and which is alternately connected to one or other of the connecting flanges around its periphery by clamping screws, wherein the plate set ring is carried on clamping bushes, is held together by the clamping screws, and is braced between spacer rings together with the connecting flanges, characterised in that each clamping bush (8) is in the form of a hardened peeling bush (8) which is provided with a cutting edge (9) and which is pressed into the plate pack bore (15) and at least in a regionwise manner into the corresponding connecting flange bore (3) and whose outside diameter (14) is larger than the maximum possible hole diameter of the respective plate pack bore (15) and the corresponding connecting flange bore (3).

2. A shaft coupling according to claim 1 characterised in that the depth of penetration of the peeling bush (8) is designed substantially to reach the bottom of the connecting flange bore (3) for the screw head (16).

3. A shaft coupling according to claim 1 or claim 2 characterised in that the outside diameter (14) of the peeling bush (8) is about 0.1 mm larger than the maximum possible values, due to production tolerances, of hole displacement and diameter of the bores (3, 15).

4. A shaft coupling according to claim 1 or one of the following claims characterised in that the peeling bush is integrated into the clamping screw (22, 35).

5. A shaft coupling according to claim 4 characterised in that the clamping screw (22) has essentially two regions (24, 26) of which the region (24) which is towards the screw head (23) is in the form of a cylindrical shank with a cutting edge (25) and the other free region (26) is in the form of an external screwthread for a lock nut (27).

6. A shaft coupling according to claim 4 characterised in that the clamping screw (35) is cylindrical with a cutting edge (38) at the free end and at the free end has a central internal bore (39) with an internal screwthread for a co-operating screw (40).

7. A process for the production of a shaft coupling according to one of claims 1 to 6 characterised in that firstly the plate pack ring, the spacer rings and the connecting flanges are positioned and then firstly from one side and thereafter from the other side respectively all peeling bushes are simultaneously and uniformly pressed into the bores.

**Revendications**

1. Accouplement flexible d'arbres comportant deux brides de raccordement pour le montage d'autres éléments d'accouplement et une couronne de paquets de lamelles à élasticité de type ressort, disposée entre les deux brides de raccordement et à distance de celles-ci, et reliée sur la périphérie en alternance avec l'une ou l'autre des brides de raccordement à l'aide de vis de serrage, la couronne de paquets de lamelles reposant sur des douilles de serrage, étant maintenue assemblée par les vis de serrage et étant serrée entre des bagues intercalaires avec les brides de raccordement,
caractérisé en ce que,
chaque douille de serrage (8) est réalisée sous forme de douille d'écroûtage trempée (8) pourvue d'une arête coupante (9), montée à la presse dans l'alésage (15) de paquets de lamelles et, au moins dans une certaine zone, dans l'alésage correspondant de brides de raccordement, dont le diamètre extérieur (14) est supérieur au diamètre maximal possible de trou de l'alésage respectif (15) de paquet de lamelles et de l'alésage correspondant (3) de brides de raccordement.

2. Raccordement d'arbres selon la revendication 1,
caractérisé en ce que,
la profondeur de pénétration de la douille d'écroûtage (8) s'étend pour la tête (16) de vis sensiblement jusqu'au fond de l'alésage (3) de raccordement.

3. Raccordement d'arbres selon la revendication 1 ou 2,
caractérisé en ce que,
le diamètre extérieur (14) de la douille d'écroûtage (8) est supérieur d'environ 0,1 mm au diamètre des alésages (3, 15) augmenté du défaut d'alignement maximal possible dû aux tolérances de fabrication.

4. Accouplement d'arbres selon la revendication 1 ou l'une des revendications suivantes,
caractérisé en ce que,
la douille en coquille est intégrée dans la vis de serrage (22, 35).

5. Accouplement d'arbres selon la revendication 4,

    caractérisé en ce que,

    la vis de serrage (22) comporte sensiblement deux zones (24, 26) parmi lesquelles la zone (24) tournée vers la tête (23) de vis est réalisée sous forme de tige cylindrique à arête coupante (25) et l'autre zone libre (26) est réalisée sous forme de filetage extérieur pour un contre-écrou (27).

6. Accouplement d'arbres selon la revendication 4,

    caractérisé en ce que,

    la vis de serrage (35) est un cylindre comportant à son extrémité libre une arête coupante (38) et comporte à son extrémité libre un alésage intérieur médian (39) pourvu d'un filetage intérieur pour une contre-vis (40).

7. Procédé de fabrication d'un accouplement d'arbres selon l'une des revendications 1 à 6,

    caractérisé en ce que,

    la couronne de paquets de lamelles, les bagues intercalaires et des brides de raccordement sont positionnées en premier lieu et que toutes les douilles d'écroûtage sont ensuite montées à la presse simultanément et de façon uniforme dans les alésages, d'abord à partir d'un côté et ensuite à partir de l'autre côté .

Fig. 1

Fig. 2

Fig. 3